# EUROPÄISCHE PATENTSCHRIFT

(11) **EP 1 651 888 B1**
(45) Veröffentlichungstag und Bekanntmachung des Hinweises auf die Patenterteilung: **02.12.2009**
(21) Anmeldenummer: 04741083.2
(22) Anmeldetag: 16.07.2004
(51) Int. Cl.: F16H 57/04

(54) **RADSATZGETRIEBE UMFASSEND EINE ÖLWANNE UND RÜCKFÜHRBOHRUNGEN.**
AXLE SET GEARBOX COMPRISING AN OIL SUMP AND RETURN DRILLINGS
TRANSMISSION D'ESSIEU MONTE COMPORTANT UNE CUVETTE COLLECTRICE D'HUILE ET DES ORIFICES DE REMISE EN CIRCULATION

(30) Priorität: 06.08.2003 DE 20312235 U
(43) Veröffentlichungstag der Anmeldung: 03.05.2006
(73) Patentinhaber: Voith Turbo GmbH & Co. KG, 89522 Heidenheim (DE)
(72) Erfinder: HANGLEITER, Christof, 89568 Hermaringen (DE)
(74) Vertreter: Koch-Huld, Annegret Christa
(86) Internationale Anmeldenummer: PCT/EP2004/007941
(87) Internationale Veröffentlichungsnummer: WO 2005/017394

(56) Entgegenhaltungen:
- EP-A- 0 317 867
- US-A- 1 960 693
- US-A- 2 242 195
- US-A- 3 625 310
- US-A- 5 505 112

## Beschreibung

Die Erfindung betrifft ein Getriebe, insbesondere ein Radsatzgetriebe für den Einsatz in Schienenfahrzeugen, im Einzelnen mit den Merkmalen aus dem Oberbegriff des Anspruches 1 (siehe z.B. US-A-2 242 195).

Antriebsstränge für Schienenfahrzeuge umfassen in der Regel eine Antriebsmaschine, eine mit dieser wenigstens mittelbar gekoppelte Getriebebaueinheit sowie zur Kopplung mit den anzutreibenden Rädern über einen Wellenstrang ein Radsatzgetriebe, welches in der Regel auch durch eine Über- oder Untersetzung charakterisiert ist. Die Radsatzgetriebe sind dabei durch wenigstens einen Eingang und einen Ausgang charakterisiert, wobei der Ausgang vorzugsweise in Form einer Hohlwelle vorliegt, der direkt mit dem anzutreibenden Rad beziehungsweise der anzutreibenden Achse drehfest verbunden ist. Das Radsatzgetriebe umfasst dabei im einfachsten Fall eine Drehzahl-/Drehmomentwandlungseinrichtung in Form eines Stirnradzuges aus zwei miteinander kämmenden Stirnrädern. Dabei läuft das abtriebsseitige Stirnrad in einer im Gehäuse des Radsatzgetriebes angeordneten Ölwanne, mittels der die Schmierung gewährleistet wird. Dabei sind in der Praxis häufig Verzahnungsschäden aufgetreten, die auf eine mangelnde Schmierung und damit auf eine zu geringe Ölmenge im Getriebe zurückzuführen sind. Es hat sich dabei jedoch gezeigt, dass bei Erhöhung der entsprechenden Schmiermittelmenge, insbesondere Ölmenge, Undichtheiten am Getriebe auftreten, sowie eine ausreichende Schmierung der Verzahnung noch nicht gegeben ist, in dem das Schmiermittel über die zwischen Gehäuse und dem abtriebseitigen Stirnrad bzw. dem mit diesem drehfest gekoppelten Element vorgesehenen berührungsfreien Dichtungen in die Umgebung austritt. Dies führt zum einen dazu, dass die Leckagen sehr hoch sind und ständig Schmiermittel nachgefüllt werden muss und ferner die Verfügbarkeit des Getriebes aufgrund der dadurch bedingten Verschleißerscheinungen reduziert wird.

Der Erfindung liegt daher die Aufgabe zugrunde, ein Getriebe, insbesondere Radsatzgetriebe, derart weiterzuentwickeln, dass die Dichtheit des Getriebes auch bei Erhöhung des Schmiermittelstandes immer sicher gewährleistet ist und eine Verbesserung der Schmierung erlangt wird. Die Verfügbarkeit des Gesamtaggregats ist zu erhöhen.

Die Erfindung ist durch die Merkmale des unabhängigen Anspruchs 1 definiert. Weiterbildungen der Erfindung sind in den abhängigen Ansprüchen angegeben.

Erfindungsgemäß werden dazu im Wesentlichen zwei Maßnahmen im Getriebe, insbesondere Radsatzgetriebe, vorgenommen. Dieses umfasst ein Gehäuse, in welchem die drehmomentübertragenden Bauteile gelagert sind. Die Drehzahl-/Drehmomentwandlungseinrichtung umfasst dabei mindestens einen Stimradzug, wobei das abtriebsseitige Stirnrad auf einer Hohlwelle gelagert ist, die drehfest mit den anzutreibenden Rädern gekoppelt wird. Die Ölwanne ist dabei im Unterteil des Gehäuses angeordnet, wobei das abtriebsseitige Stirnrad in die Ölwanne eintaucht. Erfindungsgemäß sind in der Ölwanne an den Stirnseiten und vorzugsweise auch im Bereich der Ölwannenbodenwand Öffnungen vorgesehen, die mit dem Gehäuseinnenraum, insbesondere im Bereich des Gehäuseunterteils verbunden sind. Schmiermittel, das sich im Gehäuseunterteil ansammelt, kann somit über diese Öffnungen in die Ölwanne gelangen und muss nicht erst einen Stand erreichen, bei welchem die Wände der Ölwanne überstiegen werden. Des Weiteren sind zusätzlich Rückführbohrungen im Gehäuse vorgesehen, die das in den Bereich der berührungsfreien Dichtungen gelangende Schmiermittel in den Gehäuseinnenraum leiten und vorzugsweise im Bereich eines rotierenden Elementes, insbesondere des abtriebsseitigen Stirnrades, münden. Mit dieser Maßnahme wird hierbei der im Bereich der Verzahnung bei Rotation vorliegende Unterdruck genutzt und das Schmiermittel aus den Bereich der berührungsfreien Dichtung abgesaugt.

Die erfindungsgemäße Lösung bietet den Vorteil, dass zum einen der ölbeziehungsweise Betriebsmittelstand in der Ölwanne wesentlich erhöht werden kann, ohne dass die Dichtheit des Getriebes gefährdet wird und des Weiteren kann diese Maßnahme ohne erheblichen Umbau in bereits bestehenden konventionellen Getrieben ohne Probleme wirkungsvoll nachgerüstet werden.

Bezüglich der Anordnung der einzelnen Öffnungen in der Ölwanne bestehen eine Vielzahl von Möglichkeiten. Diese sind jeweils im Bereich der Stirnseiten angeordnet. Zusätzlich ist bei nicht bündigem Abschluss der Wanne mit dem Boden des Gehäuseunterteils auch an der Ölwannenunterwand eine entsprechende Öffnung vorgesehen. Das Schmier- beziehungsweise Betriebsmittel kann dann sicher in die Ölwanne einfließen.

Bei Ausführungen mit Ölführungseinsätzen in der Ölwanne, die dadurch charakterisiert sind, dass diese zum Mittelpunkt der Ölwanne hin geneigt ausgeführt sind, ist diese Öffnung dann vorzugsweise im Bereich des Scheitelpunktes angeordnet.

Die erfindungsgemäße Lösung wird nachfolgend anhand von Figuren erläutert. Darin ist im Einzelnen Folgendes dargestellt:
- Figur 1: verdeutlicht in schematisch vereinfachter Darstellung anhand eines Schrägschnittes durch ein erfindungsgemäß gestaltetes Radsatzgetriebe den Grundaufbau;
- Figur 2a - 2d: verdeutlichen in schematisch vereinfachter Darstellung anhand von verschiedenen Ansichten und Schnittdarstellungen eine mögliche Ausführung einer erfindungsgemäß gestalteten Ölwanne;
- Figur 3: verdeutlicht anhand einer Ansicht gemäß Figur 2c eine weitere alternative Ausgestaltung.

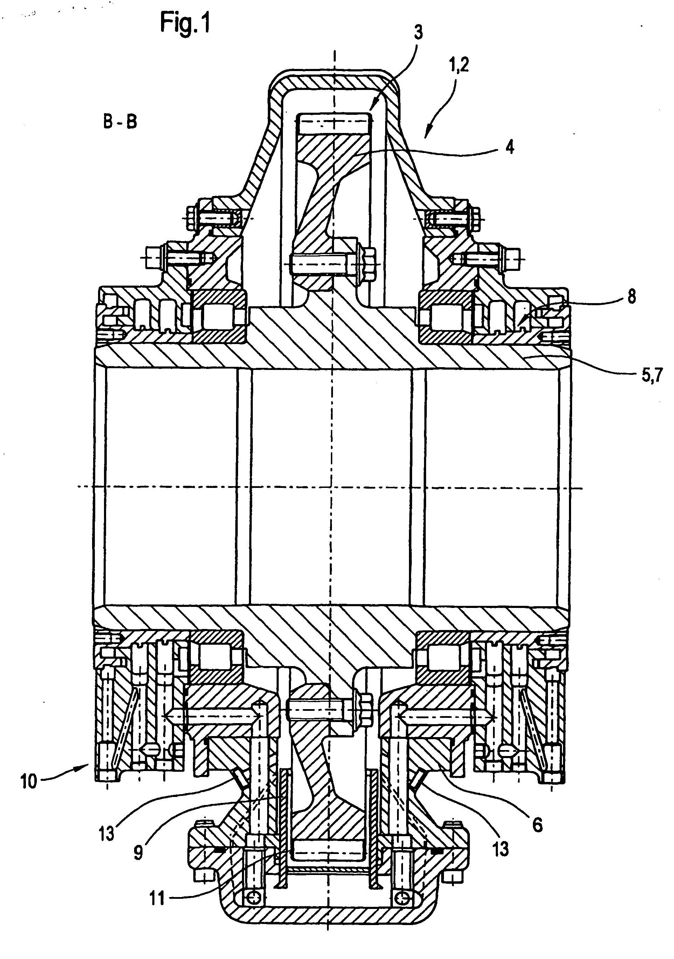

Die Figur 1 verdeutlicht in schematisch vereinfachter Darstellung einen Ausschnitt aus einem Getriebe 1, insbesondere einem Radsatzgetriebe 2, wie es zum Achsantrieb in Schienenfahrzeugen Verwendung findet. Das Radsatzgetriebe 2 umfasst dabei wenigstens eine Drehzahl-/Drehmomentwandlungseinrichtung 3, welche im einfachsten Fall in Form eines Stimradzuges mit entsprechender Übersetzung ausgebildet ist. In der Figur 1 ist dabei lediglich das mit der Achse gekoppelte Stirnrad 4, das heißt der Ausgang 5 der Drehzahl-/Drehmomentwandlungseinrichtung 3 im Schnitt wiedergegeben. Zu erkennen ist dabei ein Gehäuse 6, welches das Radsatzgetriebe 2 umschließt. Die einzelnen Elemente der Drehzahl-/Drehmomentwandlungseinrichtung 3 sind dabei im Gehäuse 6 drehbar gelagert. Dies gilt auch für das den Ausgang 5 bildende Stirnrad, welches einteilig mit einer Hohlwelle 7 ausgeführt ist oder aber mit dieser drehfest gekoppelt ist und das in entsprechender Weise mit den anzutreibenden Rädern beziehungsweise mit der diese verbindenden Achse gekoppelt ist. Zwischen dem Gehäuse 6 und dem Stirnrad 4, insbesondere der Hohlwelle 7 beziehungsweise einem drehfest mit diesem gekoppelten Element ist eine berührungsfreie Dichtung 8 vorgesehen, welche im einfachsten Fall als Labyrinthdichtung oder Spaltdichtung ausgeführt ist. Der Drehzahl-/Drehmomentwandlungseinrichtung 3 ist ferner im Gehäuse 6 eine schmiermittelaufnehmende Wanne in Form einer Ölwanne 9 zugeordnet. Diese ist in der Regel im Gehäuseunterteil 10 des Gehäuses 6 angeordnet. Das Gehäuse 6 ist dazu wenigstens zweiteilig ausgeführt. Die Ölwanne 9 ist dabei unterhalb des den Ausgang 5 bildenden Stirnrades 4 der Drehzahl-/Drehmomentwandlungseinrichtung 3 angeordnet, wobei die Anordnung derart erfolgt, dass während des Betriebes, insbesondere bei Rotation des Stirnrades 4, die Verzahnung der Drehzahl-/Drehmomentwandlungseinrichtung 3 eine Schmierung erfolgt. Dazu taucht die Verzahnung 11 des Stirnrades 4 wenigstens teilweise in die Ölwanne 9 ein. Um Verzahnungsschäden aufgrund mangelnder Schmierung zu vermeiden, werden größere Schmiermittelmengen, insbesondere Ölmengen, benötigt. Diese führen jedoch bei den herkömmlichen Ausführungen dazu, dass diese in den Bereich der Dichtungsebene, die durch die berührungsfreien Dichtungen 8 zwischen Gehäuse 6 und dem rotierenden Elementen, insbesondere dem Ausgang 5 beschrieben ist, gelangt, wobei über die Dichtungen bei erhöhtem Anfall an Schmiermittel dieses an die Umgebung gelangt. Zur Vermeidung der aus dem Stand der Technik bekannten Nachteile bei Erhöhung der Schmiermittelmenge werden dabei erfindungsgemäß zum einen zusätzliche Öffnungen an der Ölwanne 9 vorgesehen, die hier mit 12 bezeichnet sind, und es werden im Bereich der Dichtungsebene Rückführbohrungen 13 im Gehäuse vorgesehen, die der Verbindung eines Rücklaufes zum Gehäuseinneren, das heißt insbesondere dem im Gehäuseunterteil 10 sich einstellenden Betriebsmittelsumpf, gewährleisten. Dadurch wird erreicht, dass während des Betriebes ein Unterdruck im Bereich des Stirnrades 4 entsteht und das Schmieröl in den berührungsfreien Dichtungen 8 abgesaugt wird. Die zusätzlichen Öffnungen in der Ölwanne 9, die mit 12 bezeichnet sind, dienen der Vergrößerung der Schmiermittelmenge in der Ölwanne 9, wodurch ein sicheres Eintauchen der Verzahnung 11 des den Ausgang 5 der Drehzahl-/Drehmomentwandlungseinrichtung 3 bildenden Stirnrades 4 in das Schmiermittel realisiert werden kann.

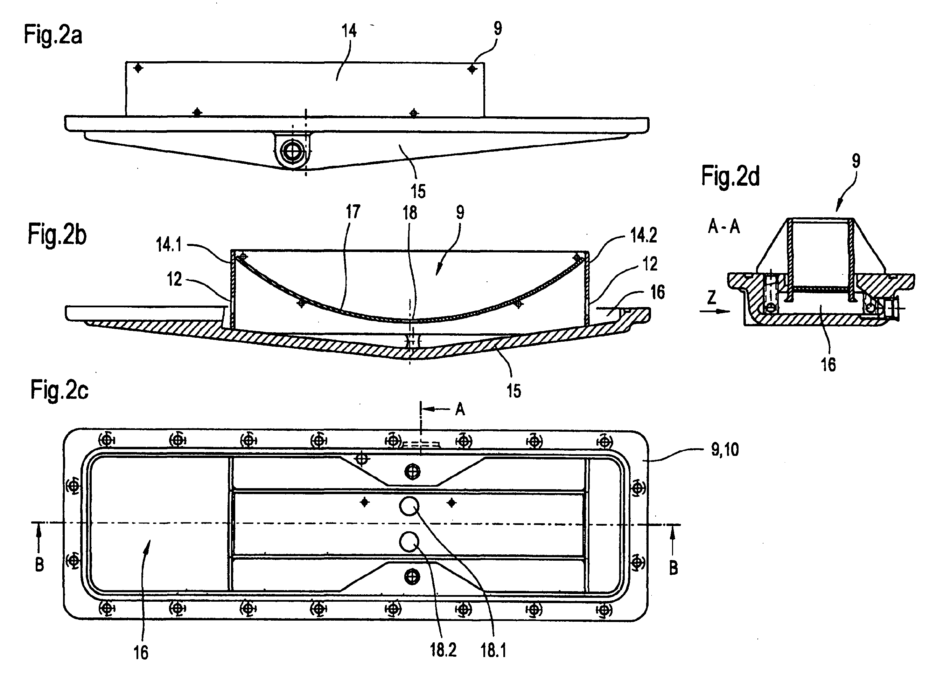

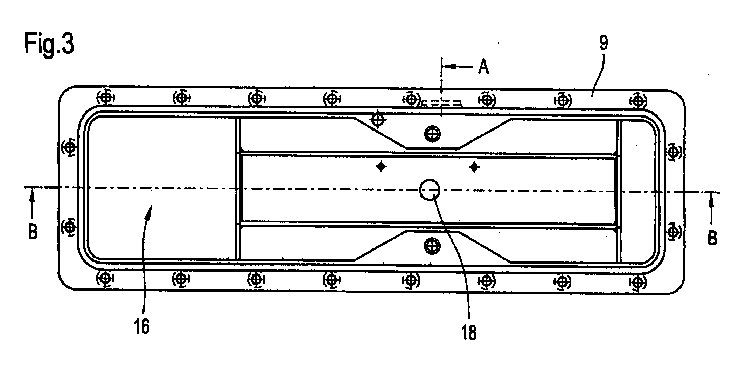

Die Figuren 2 und 3 verdeutlichen dabei anhand einzelner Ansichten unterschiedliche Ausführungen für die im Gehäuseunterteil 10 im Gehäuse 6 angeordnete Ölwanne 9. Die Figur 2a verdeutlicht dabei eine Ansicht von rechts gemäß Figur 1, wobei die Ölwanne 9 für sich allein betrachtet wird. Diese wird von Seitenwänden 14 gebildet, die an einer geneigt ausgeführten Gehäuseunterwand im vom Gehäuseunterteil 10 umschlossenen Gehäuseinnenraum 16 angeordnet ist. Dieser Gehäuseinnenraum 16 dient der Ansammlung von überschüssigem Betriebsmittel beziehungsweise Schmiermittel. Das Schmiermittel gelangt dabei in der in Figur 2b anhand einer Schnittdarstellung gemäß Figur 2a dargestellten Ausführung, aus dem Gehäuseinnenraum 16 über in den Gehäusewänden 14 angeordnete Bohrungen 12 in die Ölwanne 9. Die Bohrungen 12 sind dabei in den Stirnwänden 14.1 und 14.2 der Ölwanne angeordnet, wobei diese möglichst nah in Bodennähe im Gehäuseunterteil 10 angeordnet sind. Ferner umfasst die Ölwanne 9 einen Ölführungseinsatz 17. Dieser ist zur Mitte der Ölwanne hin geneigt ausgeführt, so dass sich das Betriebsmittel hauptsächlich mittig, das heißt möglichst unterhalb der in der Ölwanne umlaufenden Verzahnung ansammelt. Bei der in der Figur 2b dargestellten Ausführung ist eine weitere Öffnung 18 im Bereich des Scheitelpunktes 19 des Ölführungseinsatzes 17 angeordnet. Damit wird es möglich, dass mehr Schmiermittel aus dem Gehäuseinnenraum 16, insbesondere dem Gehäuseunterteil 10, in die Ölwanne 9 hineinfließen kann und die Verzahnung, die bis in diese Ölwanne 9 hineinreicht, besser geschmiert wird. Gemäß Figur 2c, die eine Ansicht von oben auf eine erfindungsgemäß gestaltete Ölwanne 9 wiedergibt, sind im Bereich des Scheitelpunktes eine Mehrzahl von Öffnungen 18, vorzugsweise zwei, 18.1, 18.2, vorgesehen. Denkbar ist eine beliebige Anzahl von derartigen Öffnungen, die vorzugsweise alle im Bereich des Scheitelpunktes 19 beziehungsweise der durch den Scheitelpunkt verlaufenden Scheitellinie, die in der Figur 2c in.strichpunktierter Darstellung wiedergegeben ist, charakterisiert ist. Die Figur 2d verdeutlicht dabei eine Ansicht durch einen Axialschnitt einer erfindungsgemäß gestalteten Ölwanne 9, bei der deren Zuordnung beziehungsweise Einbau in den Gehäuseunterteil 10 wiedergegeben ist. Diese Ansicht entspricht dabei einer Ansicht A - A gemäß Figur 2c.

Dem gegenüber verdeutlicht die Figur 3 eine alternative Ausgestaltung gemäß Figur 2c mit lediglich nur einer Öffnung 18 im Bereich des Scheitelpunktes 19. Der übrige Grundaufbau entspricht dem in der Figur 2 Beschriebenen, weshalb für gleiche Elemente die gleichen Bezugszeichen verwendet werden.

Die erfindungsgemäße Lösung ist nicht auf die in den Figuren 1 bis 3 dargestellten Ausführungen beschränkt. Entscheidend ist, dass zur Erhöhung der Schmiermittelmenge in der Ölwanne 9 zusätzliche Öffnungen an dieser vorgesehen sind, die mit dem Innenraum des Gehäuses und damit den sich dort ansammelnden Betriebsmittelsumpf gekoppelt sind. Ferner sind zusätzlich, wie in der Figur 1 dargestellt, Rückführleitungen im Gehäuse 6 vorgesehen, die in den Gehäuseinnenraum 16 am Gehäuseunterteil münden, insbesondere im Bereich der Verzahnung. Dadurch entsteht ein Unterdruck im Bereich der Verzahnung und das Getriebeöl beziehungsweise das Schmiermittel im Bereich der berührungsfreien Dichtungen 8 wird abgesaugt und ebenfalls in den Schmiermittelsumpf verbracht. Die Entlastung dieser Rückführbohrungen erfolgt im Bereich des Stirnrades 4, das heißt einem Bereich mit Unterdruck, wodurch die Dichtheit der Labyrinthdichtungen, insbesondere der berührungsfreien Dichtungen 8 gewährleistet wird.

### Bezugszeichenliste

- 1: Getriebe
- 2: Radsatzgetriebe
- 3: Drehzahl-/Drehmomentwandlungseinrichtung
- 4: Stirnrad
- 5: Ausgang
- 6: Gehäuse
- 7: Hohlwelle
- 8: berührungsfreie Dichtung
- 9: Ölwanne
- 10: Gehäuseunterteil
- 11: Verzahnung
- 12: zusätzliche Öffnung an der Ölwanne 9
- 13: Rückführbohrungen
- 14: Seitenwände
- 14.1, 14.2: Stirnwände
- 15: Gehäuseunterwand
- 16: Gehäuseinnenraum
- 17: Ölführungseinsatz
- 18: Öffnung
- 18.1, 18.2: Öffnung
- 19: Scheitelpunkt

## Patentansprüche

1. Getriebe (1), insbesondere Radsatzgetriebe (2) zum Antrieb von Achsen oder Einzelrädern, insbesondere in Schienenfahrzeugantrieben
1.1 mit einem Gehäuse (6);
1.2 mit wenigstens einer im Gehäuse (6) gelagerten Drehzahl-/Drehmomentwandlungseinrichtung (3), umfassend wenigstens ein abtriebsseitig angeordnetes Stirnrad (4), wobei zwischen Gehäuse (6) und der Drehzahl-/Drehmomentwandlungs- beziehungsweise Übertragungseinrichtung (3) eine berührungsfreie Dichtung (8) vorgesehen ist;
1.3 mit einer im Gehäuseunterteil (10) angeordneten Ölwanne (9), in welche das abtriebsseitige Stirnrad (4) wenigstens teilweise eintaucht; **gekennzeichnet durch** die folgenden Merkmale:
1.4 die Ölwanne (9) weist im Bereich ihrer Stirnseiten Öffnungen (12) auf, die in Bodennähe im Gehäuseunterteil (10) angeordnet sind und **durch** die das sich im Gehäuseunterteil (10) ansammelnde Schmiermittel in die Ölwanne (9) gelangt;
1.5 im Bereich der Dichtungsebene ist im Gehäuse (6) wenigstens eine Rückführbohrung (13) zur Rückführung von in den Bereich der berührungsfreien Dichtung (8) gelangendem Schmiermittel in den Gehäuseinnenraum (16) vorgesehen;
1.6 die Rückführbohrungen (13) münden im Gehäuse im Bereich der Erstreckung des abtriebsseitigen Stirnrades (4).

2. Getriebe (1) nach Anspruch 1, **dadurch gekennzeichnet, dass** die Ölwanne (9) einen Ölführungseinsatz (17) umfasst, der in die Ölwanne integriert ist und der einen gewölbten Boden enthält.

3. Getriebe (1) nach Anspruch 2, **dadurch gekennzeichnet, dass** der Ölführungseinsatz (17) im Bereich des Scheitelpunktes (19) der gewölbten Bodenfläche wenigstens eine Öffnung (18) aufweist, die mit dem darunter liegenden Gehäuseinnenraum (16) verbunden ist.

4. Getriebe (1) nach einem der Ansprüche 1 bis 3, **dadurch gekennzeichnet, dass** die berührungsfreien Dichtungen als Labyrinthdichtungen ausgeführt sind.

## Claims

1. A transmission (1), especially a wheelset transmission (2) for driving axles or individual wheels, especially in rail vehicle drives,
1.1 with a housing (6);
1.2 with at least one speed/torque conversion device (3) which is held in the housing (6) and comprises at least one spur gear (4) arranged on the output side, a contact-free seal (8) being provided between the housing (6) and the speed/torque conversion or transmission device (3);
1.3 with an oil pan (9) arranged in the bottom part (10) of the housing, in which the spur gear (4) on the output side immerses at least in part, **characterized by** the following features:
1.4 the oil pan (9) comprises openings (12) in the region of its face side which are arranged close to the floor in the bottom part (10) of the housing and through which the lubricant collecting in the bottom part (10) of the housing reaches the oil pan (9);
1.5 in the region of the sealing plane at least one return bore (13) is provided in the housing (6) for returning lubricant reaching the region of the contact-free seal (8) to the interior (16) of the housing;
1.6 the return bores (14) open in the housing in the region of the extension of the spur gear (4) on the output side.

2. A transmission (1) according to claim 1, **characterized in that** the oil pan (9) comprises an oil guide insert (17) which is integrated in the oil pan and comprises a curved floor.

3. A transmission (1) according to claim 1, **characterized in that** oil guide insert (17) comprises at least one opening (18) in the region of the apex (19) of the curved floor surface, which opening is connected with the interior space (16) of the housing that lies beneath the same.

4. A transmission (1) according to one of the claims 1 to 3, **characterized in that** the contact-free seals are arranged as labyrinth seals.

## Revendications

1. Engrenage (1), en particulier boîte d'essieu (2) pour l'entraînement d'essieux ou de roues, en particulier dans des systèmes de propulsion de véhicules ferroviaires,
1.1 avec un carter (6) ;
1.2 avec au moins un dispositif de transformation vitesse-couple (3) supporté dans le carter (3), comprenant au moins une roue droite (4) disposée du côté de la sortie, un joint sans contact (8) étant prévu entre le carter (6) et le dispositif de transformation vitesse-couple (3) ;
1.3 avec une cuvette à huile (9) disposée dans la partie inférieure du carter (10), dans laquelle la roue droite du côté de la sortie (4) plonge au moins partiellement ;
**caractérisé en ce que :**
1.4 la cuvette à huile (9) présente au niveau de ses faces frontales des ouvertures (12) qui sont disposées à proximité du fond dans la partie inférieure du carter (10) et à travers lesquelles le lubrifiant qui s'accumule dans la partie inférieure du carter (10) parvient dans la cuvette à huile (9) ;
1.5 il est prévu dans le carter (6) au niveau du plan du joint au moins un alésage de retour (13) pour le retour du lubrifiant parvenant au niveau du joint sans contact (8) dans l'intérieur du carter (16) ;
1.6 les alésages de retour (13) débouchent dans le carter au niveau de l'extension de la roue droite du côté de la sortie (4).

2. Engrenage (1) selon la revendication 1, **caractérisé en ce que** la cuvette à huile (9) comprend un insert de passage d'huile (17) qui est intégré dans la cuvette à huile et contient un fond bombé.

3. Engrenage (1) selon la revendication 2, **caractérisé en ce que** l'insert de passage d'huile (17) présente au niveau du sommet (19) de la surface de fond bombée au moins une ouverture (18) qui communique avec l'intérieur du carter (16) situé en dessous.

4. Engrenage (1) selon l'une des revendications 1 à 3, **caractérisé en ce que** les joints sans contact sont réalisés comme des joints à labyrinthe.
